# FASCICULE DE BREVET EUROPEEN

(11) **EP 3 028 373 B1**
(45) Date de publication et mention de la délivrance du brevet: **09.08.2017**
(21) Numéro de dépôt: 14748254.1
(22) Date de dépôt: 21.07.2014
(51) Int. Cl.: H02K 1/24, H02K 3/28, H02K 3/38, H02K 3/50, H02K 9/04, H02K 13/02

(54) **ROTOR À GRIFFES COMPORTANT UN CLIP DE FIXATION D'UN FIL D'EXTREMITE DU BOBINAGE ET MACHINE ELECTRIQUE ASSOCIEE**
KLAUENPOLLÄUFER MIT EINER KLAMMER ZUM HALTEN EINES WICKLUNGSENDDRAHTES SOWIE ELEKTRISCHE MASCHINE DAMIT
CLAW POLE ROTOR COMPRISING A CLIP FOR RETAINING AN END-OF-WINDING WIRE AND ASSOCIATED ELECTRIC MACHINE

(30) Priorité: 01.08.2013 FR 1357619
(43) Date de publication de la demande: 08.06.2016
(73) Titulaire: Valeo Equipements Electriques Moteur, 94046 Créteil Cedex (FR)
(72) Inventeur: RIBOT, Hervé, F-62250 Saint Inglevert (FR); HIRSOU, Daniel, F-62180 Rang Du Flier (FR); LEBORGNE, Pascal, F-62170 Beutin (FR)
(86) Numéro de dépôt international: PCT/FR2014/051872
(87) Numéro de publication internationale: WO 2015/015089

(56) Documents cités:
- EP-A2- 0 994 552
- US-A1- 2009 026 854
- US-A1- 2009 236 926

## Description

### DOMAINE TECHNIQUE DE L'INVENTION

L'invention concerne un rotor à griffes comportant un clip de fixation d'un fil d'extrémité du bobinage ainsi qu'une machine électrique associée comportant un tel rotor à griffes.

L'invention concerne plus particulièrement le domaine des machines électriques tournantes telles que les alternateurs, les alterno-démarreurs et les ralentisseurs électromagnétiques.

### ETAT DE LA TECHNIQUE

Le terme « rotor à griffes » désigne un rotor de machine électrique tournante dont les pôles sont en forme de griffes. Un tel rotor est composé de deux roues polaires, opposées et imbriquées, chacune comportant des griffes. Chaque griffe d'une roue polaire s'étend en direction de l'autre roue polaire et s'insère entre deux griffes consécutives de la roue polaire opposée. Le rotor à griffes comporte des parties aimantées, et le bobinage d'excitation est enroulé autour de l'arbre de rotation de la machine.

Le rotor est agencé au sein d'un stator. Lorsque la machine électrique tournante est en fonctionnement, le rotor tourne autour de son axe, et le flux magnétique circule entre les pôles magnétiques adjacents, de polarités respectives opposées, en passant par les enroulements du stator. Les aimants disposés entre les pôles magnétiques, constitués par les griffes, servent à empêcher le flux magnétique de passer directement d'un pôle à l'autre sans passer par le stator.

Le Document US 2009/236926 A1 décrit un rotor à griffes comportant un isolant de bobine pourvu d'un clip de fixation. Les documents US 2009/026854 A1 et EP 0994552 A2 décrivent des rotors à griffes. Le Document FR 2 932 325 décrit une machine électrique particulièrement adaptée aux véhicules automobiles munie d'un rotor à griffes avec des ensembles magnétiques interpolaires comportant des aimants, qui sont à la fois de taille réduite et fixés dans des rainures latérales des griffes polaires. Le document FR 2 818 823 décrit un moyen de réalisation de l'enroulement du bobinage d'excitation d'un rotor à griffes.

Généralement des ventilateurs sont montés autour de l'arbre de rotation de part et d'autre des roues polaires pour refroidir le bobinage.

Le bobinage d'excitation d'un rotor à griffes comprend deux fils d'extrémité reliés à des bagues collectrices sur lesquelles frottent des balais pour alimenter le bobinage d'excitation. Chaque fil d'extrémité est plié au niveau du sommet du bobinage et traverse une cavité radiale, ménagée entre une paroi d'une roue polaire et un évidement du ventilateur, et une cavité axiale, ménagée entre l'arbre et un évidement du ventilateur.

Lors du fonctionnement de la machine électrique tournante, le fil d'extrémité est soumis à des vibrations importantes qui entrainent la rupture prématurée du fil au niveau de la pliure.

### OBJET DE L'INVENTION

L'invention a notamment pour but de résoudre cet inconvénient de l'art antérieur.

A cette fin, l'invention concerne un rotor à griffes comportant un arbre, une première et une seconde roue polaire fixées sur ledit arbre, un bobinage muni d'un isolant de bobine et entouré par lesdites première et seconde roues polaires, un collecteur muni d'au moins une bague collectrice, un ventilateur fixé à la première roue polaire et disposé entre le bobinage et la au moins une bague collectrice, au moins un fil d'extrémité du bobinage étant relié à une desdites au moins une bague collectrice en traversant une cavité radiale aménagée entre le ventilateur et la première roue polaire, le rotor à griffes comportant un clip de fixation d'un desdits au moins un fil d'extrémité du bobinage, ledit clip de fixation étant fixé audit isolant de bobine et comportant des moyens de sertissage disposés dans la cavité radiale pour sertir la partie du fil d'extrémité du bobinage s'étendant dans ladite cavité radiale et ledit clip de fixation comportant des moyens d'appui sur la paroi de la cavité radiale de sorte que les moyens de sertissage serrent le fil d'extrémité du bobinage lorsque les moyens de sertissage sont disposés dans ladite cavité radiale.

Le clip de fixation permet de limiter les vibrations du fil d'extrémité, diminuant ainsi les risques de rupture du fil d'extrémité.

Avantageusement, la cavité radiale est formée par un évidement dans la première roue polaire.

En variante, la cavité radiale est formée par un évidement dans le ventilateur.

Avantageusement, l'évidement a une forme de tunnel radial.

Avantageusement, les moyens de sertissage comprennent une ouverture pour insérer la partie du fil d'extrémité à sertir et les moyens d'appui comprennent une protubérance s'étendant depuis l'ouverture en direction de la paroi du ventilateur.

Avantageusement, les moyens de sertissage comportent un bord plein et les moyens d'appui comportent une protubérance de renforcement s'étendant depuis le bord plein en direction de la paroi du ventilateur.

Le ventilateur applique ainsi une contrainte sur le clip pour maintenir le fil d'extrémité. La protubérance de renforcement permet de renforcer la résistance du clip de fixation notamment pour les phases de montages ou de démontage du fil d'extrémité dans le clip de fixation.

Avantageusement, la protubérance a une longueur telle qu'elle interfère avec la paroi du ventilateur ce qui entraine lors de la disposition des moyens de sertissage dans ladite cavité radiale, un pivotement desdits moyens de sertissage par rapport à la paroi du ventilateur de sorte que les deux protubérances des moyens d'appui viennent en contact avec la paroi du ventilateur.

Avantageusement, les moyens de sertissage comportent une face inférieure en contact avec la paroi de la première roue polaire et une face supérieure en contact la paroi du ventilateur et sur laquelle sont disposés lesdits moyens d'appui, lesdits moyens d'appui permettant un maintien des moyens de sertissage entre la paroi de la première roue polaire et la paroi du ventilateur et un pincement du fil entre les deux faces des moyens de sertissage.

Avantageusement, la largeur du vide de matière entre les deux faces inférieure et supérieure est légèrement supérieure au diamètre du fil d'extrémité.

Avantageusement, la face supérieure est reliée à la face inférieure par un bord plein et un bord d'insertion.

Avantageusement, le bord d'insertion comprend une ouverture dont la taille est inférieure au diamètre du fil d'extrémité, lesdits moyens de sertissage étant aptes à se déformer pour augmenter la taille de ladite ouverture.

Avantageusement, le bord d'insertion comporte une partie biseautée au niveau de l'ouverture, la partie biseautée formant un élargissement de l'ouverture dans le sens de l'introduction du fil d'extrémité à sertir.

Préférentiellement, le bord d'insertion comporte deux parties biseautées en regard l'une de l'autre.

Avantageusement, le clip de fixation est relié par des moyens de fixation audit isolant de bobine et comporte une ligne de pliage disposée entre lesdits moyens de fixation et lesdits moyens de sertissage. La ligne de pliage permet d'anticiper le pliage du clip de fixation et d'améliorer son positionnement entre la roue polaire et le ventilateur.

Avantageusement, le clip de fixation est réalisé en matériau plastique et élastique, par exemple un plastique polyamide souple. Cette réalisation assure les besoins de flexion du bord d'insertion et permet un processus de fabrication maîtrisé.

Avantageusement, ledit clip de fixation est d'orientation axiale à l'état libre et est plié selon ladite ligne de pliage à l'état monté lorsque les moyens de sertissage sont disposés dans ladite cavité radiale.

L'invention concerne également une machine électrique comportant un rotor à griffes de l'invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue en coupe axiale d'une machine électrique tournante munie d'un clip de fixation selon un premier mode de réalisation de l'invention ;
Figure 2 : une vue en perspective d'un isolant de bobine d'excitation du rotor à griffes de la figure 1 avant l'étape d'assemblage ;
Figure 3 : une vue de face du ventilateur de la Figure 1 avant l'étape d'assemblage ;
Figure 4 : une vue en coupe radiale du clip de fixation de la figure 1 monté entre une roue polaire et le ventilateur ;
Figure 5 : une vue en coupe radiale d'un clip de fixation d'une machine électrique tournante selon un deuxième mode de réalisation de l'invention.

Les éléments identiques, similaires ou analogues conservent la même référence d'une figure à l'autre.

### DESCRIPTION D'EXEMPLES DE REALISATION DE L'INVENTION

L'invention concerne un clip de fixation 11 pour une machine 10 électrique tournante notamment un alternateur ou un alterno-démarreur. Cette machine 10 est de préférence destinée à être mise en oeuvre dans un véhicule automobile.

Un alterno-démarreur est une machine électrique tournante apte à travailler de manière réversible, d'une part, comme générateur électrique en fonction alternateur et, d'autre part, comme moteur électrique notamment pour démarrer le moteur thermique d'un véhicule automobile.

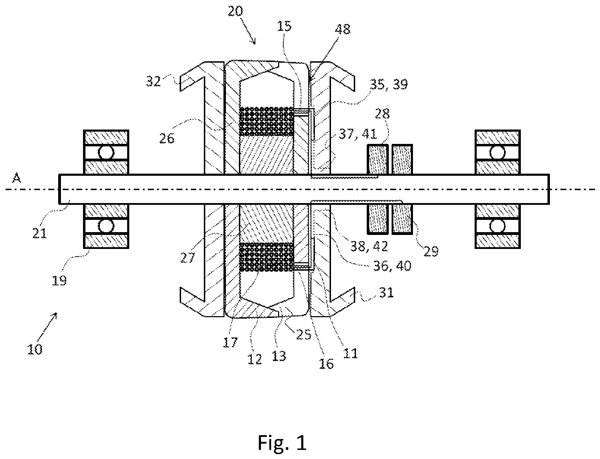

La figure 1 représente de manière schématique une machine électrique 10 munie d'un rotor à griffes 20 fixé sur un arbre 21 d'entrainement d'axe A. L'arbre 21 est monté libre en rotation par rapport à un stator (non représenté) par des roulements 19.

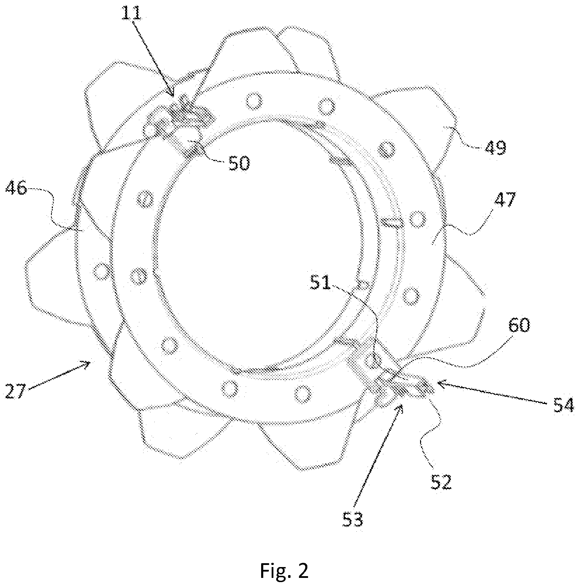

Sur la figure 2 est représenté un isolant 27 de bobine 17. Cet isolant est sensiblement cylindrique et est monté solidaire en rotation sur le tronçon central de l'arbre 21, et il est serré axialement entre deux roues polaires 25, 26. Cet isolant de bobine joue le rôle de support de bobinage d'excitation du rotor à griffes. Il permet d'isoler le bobinage du rotor. Selon une conception connue, chacune des roues polaires 25, 26 comporte une série de griffes 12, 13 qui sont par exemple au nombre de douze pour chacune des roues polaires 25, 26 et qui sont réparties angulairement de manière régulière autour de l'axe A commun aux roues polaires 25, 26 et à l'arbre 21.

Chacune des roues polaires 25, 26 comprend des griffes respectivement 13 et 12. Chacune des griffes 12, 13 d'une roue polaire 26, 25 s'étend axialement vers l'autre roue polaire 25, 26 en vis-à-vis, de manière que les griffes 12, 13 soient imbriquées les unes dans les autres. Le document EP-B-515.259 révèle plus de précisions sur les autres constituants de l'alternateur.

Selon cet exemple de réalisation deux ventilateurs 31, 32 sont montés solidaires autour de l'arbre 21 et fixés aux roues polaires 25, 26 pour faciliter la circulation de l'air dans la machine électrique comportant le rotor.

Le bobinage 17 est réalisé par l'enroulement en spires d'un fil conducteur électrique, tel qu'un fil de cuivre, de manière à former des couches de fil conducteur superposées radialement. Le fil conducteur est revêtu d'au moins une couche en matériau isolant électrique. Le bobinage 17 comprend deux fils d'extrémité 15, 16 reliés à un collecteur muni de deux bagues collectrices 28, 29 sur lesquelles frottent des balais pour alimenter le bobinage 17. La liaison entre les fils d'extrémité 15 et 16 et les bagues collectrices 28, 29 respectivement est réalisée comme on peut le voir sur la figure 1 par des lames conductrices qui sont disposées dans des évidements de l'arbre 21. Chaque fil d'extrémité 15, 16 est plié au niveau du sommet du bobinage 17 et traverse une cavité radiale 35, 36, ménagée entre la première roue polaire 25 et le ventilateur 31, puis est relié auxdites lames conductrices. Des passages 37 et 38 sont aménagés entre l'arbre 21 et le ventilateur 31. Les passages 37, 38 sont réalisés par des évidements 41, 42 du ventilateur 31.

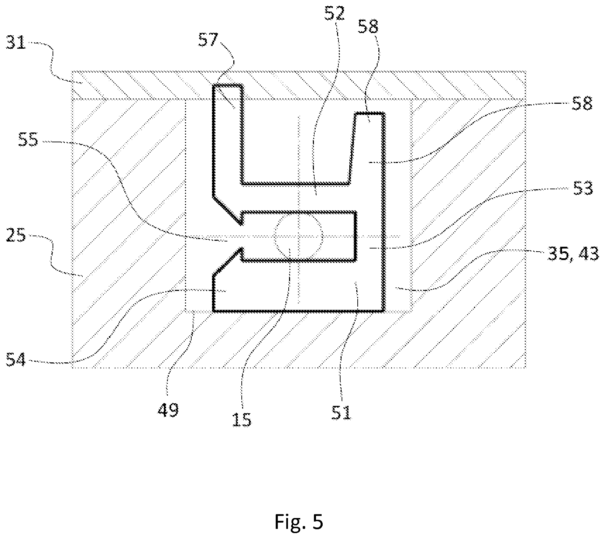

Dans le cas des figures 1 à 4, les cavités radiales 35, 36 sont réalisées par des évidements 39, 40 du ventilateur 31, chaque évidement 39, 40 formant un tunnel radial. Au contraire, dans le cas de la figure 5, les cavités radiales 35, 36 sont réalisées par des évidements de la première roue polaire 25.

Un clip de fixation 11 maintient chaque fil d'extrémité 15, 16 dans la cavité radiale 35, 36 entre la première roue polaire 25 et le ventilateur 31. Le clip de fixation 11 comporte des moyens de fixation 50 sur l'isolant 27 de bobine 17 ainsi que des moyens de sertissage s'étendant dans la cavité radiale 35, 36 et des moyens d'appui sur les moyens de sertissage contre une paroi 48 de la première roue polaire 25.

La figure 2 montre le détail de l'isolant de bobine sur lequel sont fixés les deux clips de fixations 11. L'isolant 27 de bobinage comporte des pétales 49 (non visibles sur la figure 1) destinées à être repliées après la mise en place du fil du bobinage 17 entre deux couronnes 46, 47.

Chaque clip de fixation 11 comprend un moyen de fixation 50 sur l'isolant 27 formé par une pièce en U dont l'espacement centrale est adapté à être monté en force sur l'épaisseur d'une couronne 47 de l'isolant 27. Le clip de fixation 11 s'étend axialement depuis le moyen de fixation 50 et comporte une ligne de pliage 60 de sorte à être replié sur la première roue polaire 25 lors du montage du rotor à griffes 20. A cet effet, la distance entre la ligne de pliage 60 et le moyen de fixation 50 est adaptée à l'épaisseur de la première roue polaire 25.

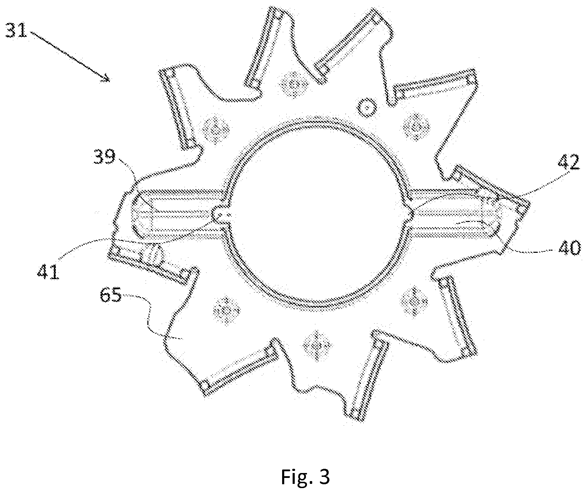

La figure 3 montre une vue de face du ventilateur 31 muni de pales 65 aptes à diriger l'air vers le bobinage 17 pour le refroidir. Le ventilateur 31 comporte également deux évidements radiaux 39, 40 destinés à former les cavités radiales 35, 36 entre la paroi 48 de la première roue polaire 25 et le ventilateur 31. Chaque évidement radial 39, 40 présente une forme en ogive et une profondeur adaptée au clip de fixation 11. Le ventilateur 31 comporte également deux évidements axiaux 41, 42 de forme semi-circulaire dont le rayon est supérieur au rayon du fil d'extrémité 15, 16. Chaque évidement axial 41, 42 est destiné à former les cavités axiales 37, 38 pour le passage d'un fil d'extrémité 15, 16.

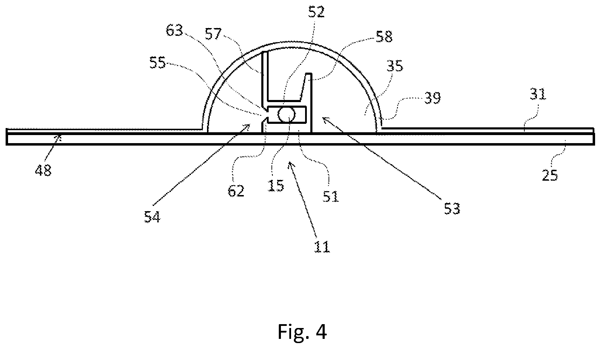

La figure 4 montre un mode de réalisation des moyens d'appui et des moyens de sertissage du clip de fixation 11. Le clip de fixation 11 est représenté dans sa position de travail enserrant un fil d'extrémité 15 dans la cavité radial 35 entre la paroi 48 de la première roue polaire 25 et l'évidement radial 39 du ventilateur 31.

Le clip de fixation comprend une face inférieure 51 en contact avec la paroi 48 de la première roue polaire 25 et une face supérieure 52 opposée à la face inférieure 51. Les faces inférieures 51 et supérieure 52 sont reliées par un bord plein 53 et un bord d'insertion 54. Le bord d'insertion comporte l'ouverture 55 permettant la mise en place du fil d'extrémité 15. La distance entre la face supérieure 52 et la face inférieure 51 est sensiblement égale au diamètre du fil d'extrémité 15. En revanche, la taille de l'ouverture 55 est inférieure au diamètre du fil d'extrémité 15. Le clip de fixation 11 se déforme pour augmenter la taille de l'ouverture 55 lors de la mise en place du fil d'extrémité 15. De préférence, le clip de fixation 11 est réalisé en matière plastique et élastique, par exemple un plastique polyamide souple.

Le bord d'insertion comporte deux parties biseautées 62, 63 en regard l'une de l'autre. Les parties biseautées 62, 63 forment un rétrécissement de l'ouverture 55 au niveau de la paroi interne du clip de fixation 11. Les parties biseautées 62, 63 permettent ainsi de faciliter la mise en place du fil d'extrémité 15 et de retenir le fil d'extrémité 15 dans le clip de fixation 11.

Le clip de fixation comprend une protubérance de renforcement 58 s'étendant depuis le bord plein 53 en direction de l'évidement 39 du ventilateur 31. La protubérance de renforcement 58 augmente la résistance du bord plein 53 et de la face supérieure 52 pour limiter les risques de cassure du clip de fixation 11 lors de la déformation de celui-ci pour la mise en place du fil d'extrémité 15.

Le clip de fixation 11 comprend également une protubérance 57 s'étendant entre l'ouverture 55 et l'évidement 39 du ventilateur 31 de sorte à maintenir une pression sur la partie biseautée 63 lorsque le ventilateur 31 est monté sur le rotor à griffes 20. Lors de l'assemblage du rotor à griffes 20, le fil d'extrémité 15 est inséré dans le clip de fixation 11 par déformation du clip de fixation 11. Le clip de fixation est plié selon la ligne de pliure 60 de sorte que la partie inférieure 51 soit en contact avec la paroi 48 de la première roue polaire 25. Lorsque le ventilateur 31 est monté sur le rotor à griffes 20, la protubérance 57 bloque le fil d'extrémité 15 et empêche les déformations du clip de fixation 11 permettant l'extraction du fil d'extrémité 15.

Le fil d'extrémité 15 est ainsi fermement maintenu dans la cavité radiale 35 ce qui limite les risques de cassure du fil d'extrémité dus aux vibrations de la machine électrique 10.

La figure 5 montre un second mode réalisation de l'invention dans lequel l'évidement 43 pour ménager la cavité radiale 35 est formé dans la première roue polaire 25. La partie inférieure 51 du clip de fixation 11 s'étend dans le fond 49 de l'évidement 43 de la première roue polaire 25 et la protubérance 57 s'étend entre l'ouverture 55 et une face plane du ventilateur 31. L'évidement 43 prend la forme d'une rainure en forme de U dont le fond 49 est plat. En variante, l'évidement 43 pourrait prendre d'autres formes sans changer l'invention.

## Revendications

1. Rotor à griffes (20) comportant :
- un arbre (21),
- une première et une seconde roue polaire (25, 26) fixées sur ledit arbre (21),
- un bobinage (17) muni d'un isolant (27) de bobine et entouré par lesdites première et seconde roues polaires (25, 26),
- un collecteur muni d'au moins une bague collectrice (28, 29),
- un ventilateur (31) fixé à la première roue polaire (25) et disposé entre le bobinage (17) et la au moins une bague collectrice (28, 29),
- au moins un fil d'extrémité (15, 16) du bobinage (17) étant relié à une desdites au moins une bague collectrice (28. 29) en traversant une cavité radiale (35, 36) aménagée entre le ventilateur (31) et la première roue polaire (25),
l'isolant de bobine comportant un clip de fixation (11) d'un desdits au moins un fil d'extrémité (15, 16) du bobinage (17),
- ledit clip de fixation (11) étant fixé audit isolant (27) de bobine (17) et comportant des moyens de sertissage (62, 63) disposés dans la cavité radiale pour sertir la partie du fil d'extrémité (15, 16) du bobinage s'étendant dans ladite cavité radiale, **caractérisé en ce que** :
ledit clip de fixation comporte des moyens d'appui (57, 58) sur la paroi de la cavité radiale de sorte que les moyens de sertissage serrent le fil d'extrémité (15, 16) du bobinage lorsque les moyens de sertissage sont disposés dans ladite cavité radiale.

2. Rotor à griffes (20) selon la revendication 1, dans lequel ladite cavité radiale est formée par un évidement dans la première roue polaire.

3. Rotor à griffes (20) selon la revendication 1, dans lequel ladite cavité radiale est formée par un évidement dans le ventilateur (31).

4. Rotor à griffes (20) selon la revendication 3, dans lequel l'évidement a une forme de tunnel radial.

5. Rotor à griffes (20) selon l'une des revendications 2 à 4, **caractérisé en ce que** les moyens de sertissage comprennent une ouverture (55) pour insérer la partie du fil d'extrémité à sertir et **en ce que** les moyens d'appui comprennent une protubérance (57) s'étendant depuis l'ouverture (55) en direction de la paroi de du ventilateur (31).

6. Rotor à griffes (20) selon l'une des revendications 2 à 5, **caractérisé en ce que** les moyens de sertissage comportent un bord plein (53) et **en ce que** les moyens d'appui comportent une protubérance de renforcement (58) s'étendant depuis le bord plein (53) en direction de la paroi du ventilateur (31).

7. Rotor à griffes (20) selon la revendication 6 prise en dépendance de la revendication 5, **caractérisé en ce que** la protubérance (57) a une longueur telle qu'elle interfère avec la paroi du ventilateur ce qui entraîne lors de la disposition des moyens de sertissage dans ladite cavité radiale, un pivotement desdits moyens de sertissage par rapport à la paroi du ventilateur de sorte que les deux protubérances (57, 58) des moyens d'appui viennent en contact avec la paroi du ventilateur (31).

8. Rotor à griffes (20) selon l'une des revendications 1 à 7, **caractérisé en ce que** les moyens de sertissage comportent :
- une face inférieure (51) en contact avec la paroi (48) de la première roue polaire (25) et
- une face supérieure (52) en contact avec la paroi du ventilateur (31) et sur laquelle sont disposés lesdits moyens d'appui,
- lesdits moyens d'appui permettant un maintien des moyens de sertissage entre la paroi (48) de la première roue polaire (25) et la paroi du ventilateur (31) et un pincement du fil entre les deux faces (51, 52) des moyens de sertissage.

9. Rotor à griffes (20) selon la revendication 8, dans lequel largeur du vide de matière entre les deux faces inférieure et supérieure (51, 52) est légèrement supérieure au diamètre du fil d'extrémité.

10. Rotor à griffes (20) selon la revendication 8 ou 9, **caractérisé en ce que** la face supérieure (52) est reliée à la face inférieure (51) par un bord plein (53) et un bord d'insertion (54).

11. Rotor à griffes (20) selon la revendication 10, **caractérisé en ce que** le bord d'insertion (54) comprend une ouverture (55) dont la taille est inférieure au diamètre du fil d'extrémité (15, 16), lesdits moyens de sertissage étant aptes à se déformer pour augmenter la taille de ladite ouverture (55).

12. Rotor à griffes (20) selon la revendication 10 ou 11, **caractérisé en ce que** le bord d'insertion (54) comporte une partie biseautée (62, 63) au niveau de l'ouverture (55), la partie biseautée (62, 63) formant un élargissement de l'ouverture (55) dans le sens de l'introduction du fil d'extrémité à sertir.

13. Rotor à griffes (20) selon la revendication 12, **caractérisé en ce que** le bord d'insertion (54) comporte deux parties biseautées (62, 63) en regard l'une de l'autre.

14. Rotor à griffes (20) selon l'une des revendications 1 à 13, **caractérisé en ce que** le clip de fixation (11) est relié par des moyens de fixation (50) audit isolant de bobine et comporte une ligne de pliage (60) disposée entre lesdits moyens de fixation (50) et lesdits moyens de sertissage.

15. Rotor à griffes (20) selon la revendication 14, **caractérisé en ce que** le clip de fixation (11) est réalisé en matériau plastique et élastique, par exemple un plastique polyamide souple.

16. Rotor à griffes (20) selon la revendication 15, **caractérisé en ce que** ledit clip de fixation (11) est d'orientation axiale à l'état libre et est plié selon ladite ligne de pliage à l'état monté lorsque les moyens de sertissage sont disposés dans ladite cavité radiale.

17. Machine (10) électrique comportant un rotor à griffes (20) selon l'une des revendications 1 à 16.

## Patentansprüche

1. Klauenpolläufer (20), welcher aufweist:
- eine Welle (21),
- ein erstes und ein zweites Polrad (25, 26), die auf der Welle (21) befestigt sind,
- eine Wicklung (17), die mit einem Spulenisolator (27) versehen und von dem ersten und dem zweiten Polrad (25, 26) umgeben ist,
- einen Kollektor, der mit wenigstens einem Kollektorring (28, 29) versehen ist,
- einen Ventilator (31), der an dem ersten Polrad (25) befestigt ist und zwischen der Wicklung (17) und dem wenigstens einen Kollektorring (28, 29) angeordnet ist,
- wenigstens einen Enddraht (15, 16) der Wicklung (17), der mit einem des wenigstens einen Kollektorrings (28, 29) verbunden ist, indem er einen radialen Hohlraum (35, 36) durchquert, der zwischen dem Ventilator (31) und dem ersten Polrad (25) angeordnet ist,
wobei der Spulenisolator eine Klammer zur Befestigung (11) eines des wenigstens einen Enddrahtes (15, 16) der Wicklung (17) aufweist,
- wobei die Befestigungsklammer (11) an dem Isolator (27) der Spule (17) befestigt ist und Quetschmittel (62, 63) aufweist, die in dem radialen Hohlraum angeordnet sind, um den Teil des Enddrahtes (15, 16) der Wicklung zu quetschen, der sich in dem radialen Hohlraum erstreckt, **dadurch gekennzeichnet, dass**:
die Befestigungsklammer Mittel zur Abstützung (57, 58) an der Wand des radialen Hohlraums aufweist, derart, dass die Quetschmittel den Enddraht (15, 16) der Wicklung einklemmen, wenn die Quetschmittel in dem radialen Hohlraum angeordnet sind.

2. Klauenpolläufer (20) nach Anspruch 1, wobei der radiale Hohlraum von einer Aussparung in dem ersten Polrad gebildet wird.

3. Klauenpolläufer (20) nach Anspruch 1, wobei der radiale Hohlraum von einer Aussparung in dem Ventilator (31) gebildet wird.

4. Klauenpolläufer (20) nach Anspruch 3, wobei die Aussparung eine Form eines radialen Tunnels hat.

5. Klauenpolläufer (20) nach einem der Ansprüche 2 bis 4, **dadurch gekennzeichnet, dass** die Quetschmittel eine Öffnung (55) zum Einführen des zu quetschenden Teils des Enddrahtes umfassen, und dadurch, dass die Abstützungsmittel einen Vorsprung (57) umfassen, der sich von der Öffnung (55) aus in Richtung der Wand des Ventilators (31) erstreckt.

6. Klauenpolläufer (20) nach einem der Ansprüche 2 bis 5, **dadurch gekennzeichnet, dass** die Quetschmittel einen massiven Rand (53) aufweisen, und dadurch, dass die Abstützungsmittel einen Verstärkungsvorsprung (58) aufweisen, der sich von dem massiven Rand (53) aus in Richtung der Wand des Ventilators (31) erstreckt.

7. Klauenpolläufer (20) nach Anspruch 6, wenn abhängig von Anspruch 5, **dadurch gekennzeichnet,**
**dass** der Vorsprung (57) eine solche Länge hat, dass er mit der Wand des Ventilators kollidiert, was bei der Anordnung der Quetschmittel in dem radialen Hohlraum ein Schwenken der Quetschmittel bezüglich der Wand des Ventilators zur Folge hat, derart, dass die zwei Vorsprünge (57, 58) der Abstützungsmittel mit der Wand des Ventilators (31) in Kontakt kommen.

8. Klauenpolläufer (20) nach einem der Ansprüche 1 bis 7, **dadurch gekennzeichnet, dass** die Quetschmittel aufweisen:
- eine untere Fläche (51), die sich mit der Wand (48) des ersten Polrades (25) in Kontakt befindet, und
- eine obere Fläche (52), die sich mit der Wand des Ventilators (31) in Kontakt befindet und auf welcher die Abstützungsmittel angeordnet sind,
- wobei die Abstützungsmittel ein Festhalten der Quetschmittel zwischen der Wand (48) des ersten Polrades (25) und der Wand des Ventilators (31) und ein Festklemmen des Drahtes zwischen den beiden Flächen (51, 52) der Quetschmittel ermöglichen.

9. Klauenpolläufer (20) nach Anspruch 8, wobei die Breite der Materiallücke zwischen der unteren und der oberen Fläche (51, 52) ein wenig größer als der Durchmesser des Enddrahtes ist.

10. Klauenpolläufer (20) nach Anspruch 8 oder 9, **dadurch gekennzeichnet, dass** die obere Fläche (52) mit der unteren Fläche (51) durch einen massiven Rand (53) und einen Einführungsrand (54) verbunden ist.

11. Klauenpolläufer (20) nach Anspruch 10, **dadurch gekennzeichnet, dass** der Einführungsrand (54) eine Öffnung (55) aufweist, deren Größe kleiner als der Durchmesser des Enddrahtes (15, 16) ist, wobei die Quetschmittel geeignet sind, sich zu verformen, um die Größe der Öffnung (55) zu vergrößern.

12. Klauenpolläufer (20) nach Anspruch 10 oder 11, **dadurch gekennzeichnet, dass** der Einführungsrand (54) an der Öffnung (55) einen abgefasten Teil (62, 63) aufweist, wobei der abgefaste Teil (62, 63) eine Ausweitung der Öffnung (55) in der Richtung der Einführung des zu quetschenden Enddrahtes bildet.

13. Klauenpolläufer (20) nach Anspruch 12, **dadurch gekennzeichnet, dass** der Einführungsrand (54) zwei abgefaste Teile (62, 63) aufweist, die einander gegenüberliegen.

14. Klauenpolläufer (20) nach einem der Ansprüche 1 bis 13, **dadurch gekennzeichnet, dass** die Befestigungsklammer (11) durch Befestigungsmittel (50) mit dem Spulenisolator verbunden ist und eine Biegelinie (60) aufweist, die zwischen den Befestigungsmitteln (50) und den Quetschmitteln angeordnet ist.

15. Klauenpolläufer (20) nach Anspruch 14, **dadurch gekennzeichnet, dass** die Befestigungsklammer (11) aus elastischem Kunststoff hergestellt ist, zum Beispiel einem flexiblen Polyamidkunststoff.

16. Klauenpolläufer (20) nach Anspruch 15, **dadurch gekennzeichnet, dass** die Befestigungsklammer (11) im freien Zustand eine axiale Ausrichtung aufweist und im eingebauten Zustand, wenn die Quetschmittel in dem radialen Hohlraum angeordnet sind, entlang der Biegelinie umgebogen ist.

17. Elektrische Maschine (10), welche einen Klauenpolläufer (20) nach einem der Ansprüche 1 bis 16 aufweist.

## Claims

1. Claw pole rotor (20) comprising:
- a shaft (21),
- a first and a second pole wheel (25, 26) fixed to said shaft (21),
- a winding (17) provided with a coil insulation (27) and surrounded by said first and second pole wheels (25, 26),
- a collector provided with at least one collector ring (28, 29),
- a fan (31) fixed to the first pole wheel (25) and arranged between the winding (17) and the at least one collector ring (28, 29),
- at least one end wire (15, 16) of the winding (17) being linked to one of said at least one collector ring (28, 29) by passing through a radial cavity (35, 36) formed between the fan (31) and the first pole wheel (25),
the coil insulation comprising a fixing clip (11) for fixing one of said at least one end wire (15, 16) of the winding (17),
- said fixing clip (11) being fixed to said coil (17) insulation (27) and comprising crimping means (62, 63) arranged in the radial cavity to crimp the part of the end wire (15, 16) of the winding extending in said radial cavity, **characterized in that**:
said fixing clip comprises bearing means (57, 58) on the wall of the radial cavity such that the crimping means crimp the end wire (15, 16) of the winding when the crimping means are arranged in said radial cavity.

2. Claw pole rotor (20) according to Claim 1, in which said radial cavity is formed by a void in the first pole wheel.

3. Claw pole rotor (20) according to Claim 1, in which said radial cavity is formed by a void in the fan (31).

4. Claw pole rotor (20) according to Claim 3, in which the void has a radial tunnel form.

5. Claw pole rotor (20) according to one of Claims 2 to 4, **characterized in that** the crimping means comprise an opening (55) for inserting the part of the end wire to be crimped and **in that** the bearing means comprise a protuberance (57) extending from the opening (55) towards the wall of the fan (31).

6. Claw pole rotor (20) according to one of Claims 2 to 5, **characterized in that** the crimping means comprise a solid side (53) and **in that** the bearing means comprise a reinforcing protuberance (58) extending from the solid side (53) towards the wall of the fan (31).

7. Claw pole rotor (20) according to Claim 6 taken as dependent on Claim 5, **characterized in that** the protuberance (57) has a length such that it interferes with the wall of the fan which causes, upon the arrangement of the crimping means in said radial cavity, a pivoting of said crimping means relative to the wall of the fan such that the two protuberances (57, 58) of the bearing means come into contact with the wall of the fan (31).

8. Claw pole rotor (20) according to one of Claims 1 to 7, **characterized in that** the crimping means comprise:
- a bottom face (51) in contact with the wall (48) of the first pole wheel (25) and
- a top face (52) in contact with the wall of the fan (31) and on which said bearing means are arranged,
- said bearing means allowing a holding of the crimping means between the wall (48) of the first pole wheel (25) and the wall of the fan (31) and a pinching of the wire between the two faces (51, 52) of the crimping means.

9. Claw pole rotor (20) according to Claim 8, in which the width of the void of material between the two bottom and top faces (51, 52) is slightly greater than the diameter of the end wire.

10. Claw pole rotor (20) according to Claim 8 or 9, **characterized in that** the top face (52) is linked to the bottom face (51) by a solid side (53) and an insertion side (54).

11. Claw pole rotor (20) according to Claim 10, **characterized in that** the insertion side (54) comprises an opening (55) whose size is less than the diameter of the end wire (15, 16), said crimping means being capable of being deformed to increase the size of said opening (55).

12. Claw pole rotor (20) according to Claim 10 or 11, **characterized in that** the insertion side (54) comprises a bevelled part (62, 63) at the level of the opening (55), the bevelled part (62, 63) forming a widening of the opening (55) in the direction of introduction of the end wire to be crimped.

13. Claw pole rotor (20) according to Claim 12, **characterized in that** the insertion side (54) comprises two bevelled parts (62, 63) facing one another.

14. Claw pole rotor (20) according to one of Claims 1 to 13, **characterized in that** the fixing clip (11) is linked by fixing means (50) to said coil insulation and comprises a fold line (60) arranged between said fixing means (50) and said crimping means.

15. Claw pole rotor (20) according to Claim 14, **characterized in that** the fixing clip (11) is made of plastic and elastic material, for example a flexible polyamide plastic.

16. Claw pole rotor (20) according to Claim 15, **characterized in that** said fixing clip (11) is axially oriented in the free state and is folded along said fold line in the mounted state when the crimping means are arranged in said radial cavity.

17. Electric machine (10) comprising a claw pole rotor (20) according to one of Claims 1 to 16.
